# EUROPEAN PATENT SPECIFICATION

(11) **EP 2 899 940 B1**
(45) Date of publication and mention of the grant of the patent: **03.06.2020**
(21) Application number: 14152248.2
(22) Date of filing: 23.01.2014
(51) Int. Cl.: H04L 29/06, H04W 12/08, H04W 84/12

(54) **CONNECTION METHOD FOR SECURE CONNECTING OF A MOBILE DEVICE SYSTEM TO A NETWORK**
VERBINDUNGSVERFAHREN FÜR SICHERE VERBINDUNG EINES MOBILEN VORRICHTUNGSSYSTEMS MIT EINEM NETZWERK
PROCÉDÉ DE CONNEXION D'UNE CONNEXION SÉCURISÉE POUR SYSTÈME DE DISPOSITIF MOBILE SUR UN RÉSEAU

(43) Date of publication of application: 29.07.2015
(73) Proprietor: Vodafone GmbH, 40549 Düsseldorf (DE)
(72) Inventor: Khan, Muddassir, 40667 Meerbusch (DE)
(74) Representative: Patentanwälte Bals & Vogel

(56) References cited:
- EP-A1- 2 355 439
- EP-A1- 2 498 442
- WO-A1-2007/077958
- WO-A2-2007/069245
- WO-A2-2009/114415
- US-A1- 2009 178 131

## Description

The present invention is focused on a connecting method for secure connecting of a Mobile Device System to a Network, a respective computer program product and a respective communication Network.

It is generally known that Mobile Device Systems try to communicate with different kind of Networks. Such a Network can for example be a web page in the Internet. Such a Network can also be an internal company Network, for example the Intranet or mail system of the company. To ensure that the communication coming from the Mobile Device System and communicating with the respective Network is secure, different solutions are known. For example, software solutions like firewalls can be placed in the Mobile Device System to ensure the protection against the possible malware like virus or the like. It is further possible that a company having multiple users with multiple Mobile Device Systems tries to carry out an over all protection for all the users, namely all the employees. If a lot of employees have an own Mobile Device System for example a tablet, a laptop or a mobile telephone the company wants to ensure that none of that Mobile Device Systems is infected by malware like viruses or the like. This could be done by software running on each of the Mobile Device Systems communicating with a respective policy within the Network of the company. One disadvantage of this solution is that all of the Mobile Device Systems have to have a software installed, which enables the respective Device to communicate with the communication policy of the company. Due to a fact that such a software has to be installed on each of the Mobile Device Systems it is in general possible that malware can infect the software and thereby tries to open a backdoor to the respective Mobile Device System. Moreover, it is cost intensive and complex to ensure that every Mobile Device System of every employee is configured with respective necessary software. A further disadvantage of the known solution is that none of the employees can enter the respective and the requested Network with any other Mobile Device System for example a private computer, a private cellphone or a private tablet PC. Since those other Mobile Device System or private devices do not comprise the installed software that enables a communication according to a respective communication policy within the requested Network, e.g. of the company.

For example WO 2007/077958 A1 discloses in general the possibility of checking a request within a policy server. Also EP 2 355 439 A1 is describing the Access to restricted services. In EP 2 498 442 A1 a method is describes for detection an prevention od malware within a network.

Based on the foresaid information it is an object of the present invention to solve the disadvantages mentioned above. In particular, it is an object of the present invention to decrease complexity of the policy structure without reducing the security level.

Aforesaid problem is solved by a connecting method according to independent claim 1, a computer program product according to independent claim 13 as well as a communication Network according to independent claim 15. Further features and details of the invention result from the subclaims, the description and the drawings. Features and details discussed with respect to the inventive connecting method can thereby of course be correlated with the inventive computer program product and/or the respective communication Network and the other way round.

According to the present invention, a connecting method for secure connecting of the Mobile Device System to a Network is given, comprising the following steps:
- Sending a communication request from the Mobile Device System to a Network Operator requesting a communication to the Network,
- Receiving the communication request at the Network Operator and extracting at least one specification information out of the communication request specifying the Mobile Device System,
- Forwarding the communication request via a private Access Point Network to a Cleaning Hub based on the specification information,
- Comparing the communication request at the Cleaning Hub to at least one communication policy,
- Allowing or denying the communication of the Mobile Device System to the Network requested with the communication request based on the result of the comparison to the at least one communication policy.

According to the present invention, the intelligence of the communication policy is shifted to a cloud based position, namely the Cleaning Hub. Furthermore, the intelligence to ensure that every communication request has to pass this cloud based position, namely the Cleaning Hub, is also based outside of the Mobile Device System, namely in the combination of the Network Operator and the private Access Point Network.

By following the inventive method, every Mobile Device System which is used for the respective company Network, is protected by that method. In particular, respective user lists or connection lists can be stored at the private Access Point Network and/or at the Cleaning Hub to ensure that the method is carried out even for private Mobile Device Systems of each of the company's employees.

According to the present invention, the communication request is a request sent by the Mobile Device System including the request to enter a specific Network or a specific part of the Network. This could be the request to enter the page of the company or a web page of the external and open Internet. The communication request also includes specification information for specifying the Mobile Device System. As it will be discussed later on a more detail this specification information in particular gives information about the Device itself which is used to send the communication request out of the Mobile Device System.

According to the present invention the Mobile Device System can comprise one single Mobile Device or can be configured as a bundle of two or more Mobile Devices. In particular, the Mobile Device System can also be the combination of a general Mobile Device like a cellphone or tablet on the one hand and a Mobile wireless (WiFi) Device, so-called MiFi Device. Thereby, the Mobile Device System can be of different complexity and for all different complexities of the Mobile Device System the inventive connecting method can be carried out.

The forwarding step of the communication request is carried out by the use of a private Access Point Network. A private Access Point Network according to the present invention can for example be configured to be a router in the communication Network. This router is configured to be private and thereby forms the private Access Point Network to give the Mobile Device System the possibility on a private step to enter the Internet or pass through the Internet to the respective Cleaning Hub. The Network Operator comprises the necessary intelligence to forward the communication request via that private Access Point Network to the respective Cleaning Hub.

A Cleaning Hub according to the present invention is a position within the Network, particular within the Internet, which could be owned by the respective company, by the respective Network company or by any other third party company offering that service. Therefore, the Cleaning Hub can also be initialed as a cloud based position or a data cloud, comprising a location of a respective communication policy and the location where the comparison takes place.

Aforesaid feature leads to the possibility that the communication policy is only cloud based at works for every single communication request which is passed through the Cleaning Hub via the private Access Point Network. This leads to the situation that the Cleaning Hub acts independently from the respective Mobile Device System in particular from which the Mobile Device System the communication request has been sent. This leads to the possibility that every employee and user of the inventive method can use different and in particular private Mobile Device Systems and still ensure the security of the present inventive method. This level of security can be achieved without installing certain software, e.g. a certain security or device manager software on the different and in particular private Mobile Device Systems.

The comparing step of the communication request to ensure the communication policy can per example be any easy comparison to a list, which can be configured as a white list or a black list. For example, the communication request contains the request to enter one specific web page in the open Internet. This web page is compared in the Cleaning Hub to a respective black list or white list and thereby can be decided if the Mobile Device System is allowed to enter that specific web page in the open Internet. This answer is sent back to the Mobile Device System and thereby the requested combination is allowed or denied.

As it can be derived from the above description of the inventive method, it is very easy and very simple to ensure that all Mobile Device Systems used for the respective company and respective communication requests are secured by the inventive method. The respective communication policy is furthermore simple and easy to update because it is only one single and cloud based communication policy. If the company wants to change specific parts of the communication policy it can be carried out fast and easy in the cloud base at one single position in the Network.

On the other end of the communication line, namely at the end of the users, they are enabled to use different kind of Mobile Device Systems in particular they are enabled to use their own private Mobile Devices to communicate with the Network via the inventive securing method. This leads to a higher flexibility even allows the users to use Mobile Devices of third parties, for example in an Internet cafe, and still ensure secure communication according to the company's communication policy.

Beside the protection of the Network itself it is also possible to ensure two way protection, namely to protective the Mobile Device or the respective Mobile Device System.

The respective communication request of course further can comprise information about the geographic position of the Mobile Device System and thereby include roaming information into the communication request. The communication policy can also comprise information about roaming policy and thereby ensures that roaming costs for the respective company do not exceed a respective threshold. Thereby, further advantage can be achieved by the inventive connecting method.

Of course, according to the present invention, there can be one single or a multiple different private Access Point Network passing on the respective communication request to the Cleaning Hub. This depends on the respective Network situation, the geographical position of the Mobile Device System and the size of the company respectively the number of the users and Mobile Devices of that company. Thereby, all of the Mobile Devices can access the same private Access Point Network or can possibly enter different private Access Point Networks.

According to the present invention, it is possible that the inventive connecting method is characterized in that the specification information is based on information stored in a Subscriber Identity Module (SIM) and/or can comprise a Mobile Device Number. These are possibilities, which do not exclude further not labelled possibilities for the specification information. For example, the Subscriber Identity Module itself or any other information stored in the SIM, e.g. the SIM number or the IMSI, can be used to build up the specification information. Also the so-called IMEI Number, the MSISDN or the IMSI Number can be used for specification purposes. Also a combination of different Numbers follow for example a combination of the telephone number, the SIM Number or the IMSI Number can be used as specification information. Of course, the respective Number can be part of one Mobile Device or a so-called MiFi Device which is the interface to the Network Operator.

It is further possible that according to the present invention the connecting method is characterized in that the Network Operator carries out a comparison of the specification information with a connection list, whereby based on that comparison the forwarding of the communication request is carried out. This leads to intelligence at the Network Operator. Namely, the Network Operator carries out actively the comparison of the specification information with the connection list. The connection list can handle or comprise information from the respective company, so that the Network Operator knows that each single communication request has to be checked against that connection list. If the communication request comes from a user which is on that communication list, this actively carried out comparison of the Network Operator ensures that such communication request is passed on to the Cleaning Hub via the private Access Point Network. The Network Operator may be configured to forward, based on the specification information or a comparison of the specification information with a connection list, the communication request via a certain private Access Point Network to the cleaning Hub. This leads to an active decision be the Network Operator and ensures that there has to be no intelligence at the Mobile Device Systems. Furthermore, the communication request of each Mobile Device System is ensured to be passed on through the inventive secure connecting method by the active comparison step at the Network Operator.

It is also possible that according to the present invention the connecting method is characterized in that the specification information comprises trigger information causing the Network Operator to forward the communication request to the Cleaning Hub via a specific private Access Point Network. This is almost the other way round compared to the technical solution discussed above. In this case the Mobile Device System sends trigger information which is part of the specification information causing the Network Operator to carry out the inventive method. This leads to an advantage, namely the reduction of complexity of the Network Operator. No comparison step has to be carried out at the Network Operator and still security of the inventive connecting method is ensured for each of the Mobile Devices.

It is further of advantage that according to the present invention the connecting method is characterized in that the Mobile Device System comprises at least one Mobile Device and one Mobile WiFi Device, whereby at least one Mobile Device is coupled with the Mobile WiFi Device via a wireless communication and the communication request is sent from the Mobile WiFi Device to the Network Operator. Beside the more easy and simple situation where a Mobile Device System is configured to be one single Mobile Device this is a further complex situation where in particular the use of flexibilities increased. The Mobile WiFi Device can for example be a company Device comprising the respective intelligence for trigger information and/or specification information discussed above. The Mobile WiFi Device can be configured to send or forward a communication request via a certain private Access Point Network (APN) to a Network, for example, a company Network. This means, the Mobile WiFi Device can comprise a private Access Point Network configuration, wherein the private Access Point Network has been assigned by a Network Operator to the respective company. As a consequence private Mobile Devices which communicate via the Mobile WiFi Device do not have to be configured to communicate via the private APN with the (company) Network. In further embodiments such a configuration of a private APN may be stored at the Network Operator. Each of that Mobile WiFi Devices of the company is given out to the respective users. The users now can enter that Network via that Mobile WiFi Device by using different kind of Mobile Devices. In particular, the users are enabled to use their own private Mobile Devices, for example home tablet PCs, laptops or even a computer at an Internet cafe. The intelligence which is necessary to carry out the connecting method is ensured by the Mobile WiFi Device which can bundle even two or more Mobile Devices for one communication situation. This ensures even the possibility to use Mobile Devices which have only WiFi communication ability and no cellular Network capability.

It is also possible that according to the present invention the connecting method is characterized in that a secure communication channel is built up from the Cleaning Hub to the Network the Mobile Device System requested to connect to. A secure channel communication channel can for example be configured as a so-called VPN (Virtual Private Network) tunnel. Also standard encryption methods can be used in addition or alternatively to each other. A secure communication channel between the Cleaning Hub and the Network in particular extends through the open Internet and thereby ensures that each communication is protected by the security of that secure communication channel.

It is also possible that according to the present invention the connecting method is characterized in that a secure communication channel is built up from the private Access Point Network to the Cleaning Hub. Also this communication between the private Access Point Network and the Cleaning Hub is possibly communicated through the open Internet. To ensure higher security a respective secure communication channel which has already been discussed above, can also be configured between the private Access Point Network and the Cleaning Hub to achieve the same advantages. Such a secure communication channel may be a VPN tunnel that is based, for example, on Internet Protocol Security (IPsec).

It is further possible that according to the present invention the connecting method is characterized in that the specification information comprises at least one user specification, whereby that user specification, in particular in form of a password, is forwarded to the Network the Mobile Device System requested to connect to. For example, if the respective and requested Network is the email system of a company, it is possible to enter that email system directly on the respective user account of the Mobile Device System. Thereby, the Mobile Device System comprises the respective user specification identifying that user at the request at Network, namely the email system of a company. Not only the recognition of the respective user but also the sending forward of the respective password of the user enables a reduced complexity. Thereby, the user can try to enter his own and private email account at the company by one single communication request. Due to the fact that user specification and in particular the respective password is forwarded to the Network and therefore namely to the email system he can directly enter his private email account.

A further possibility according the present invention is if a connecting method is characterized in that the communication policy comprises at least one of the following information:
- Black list of banned web pages
- White list of allowed web pages
- User specific lists

Aforesaid list is not exclusively. A black list can for example comprise the Networks or web pages to which the respective Mobile Device System is not allowed to communicate with. A white list comprises allowed web pages and therefore all other web pages which are requested to communicate with are denied. User specific lists can comprise black lists or white lists and a more complex communication policy can be built up. For example, some users of a company can be allowed to enter parts of the Network which other users are banned from. The respective intelligence once more is located in a cloud based situation, namely in the Cleaning Hub.

It is further possible according to the present invention that the connecting method is characterized in that the Cleaning Hub checks all data traffic between the Network and the Mobile Device System, even after requested communication has been allowed. This leads to a further security level. With the checking of all data traffic, a control of the data traffic in particular protection of the data traffic is defined. The Cleaning Hub thereby is able to protect the Network and/or the Mobile Device System against malware like phishing activities or virus software.

A further object of the present invention is to offer a Computer program product being stored on a computer readable medium, comprising the following:
- Computer readable program means, initiating the computer to send a communication request from a Mobile Device System to a Network Operator requesting a communication to a Network,
- Computer readable program means, initiating the computer to receive the communication request at the Network Operator and extract at least one specification information out of the communication request specifying the Mobile Device System,
- Computer readable program means, initiating the computer to forward the communication request via a private Access Point Network to a Cleaning Hub based on the specification information,
- Computer readable program means, initiating the computer to compare the communication request at the Cleaning Hub to at least one communication policy,
- Computer readable program means, initiating the computer to allow or deny the communication of the Mobile Device System to the Network requested with the communication request based on the result of the comparison to the at least one communication policy.

An inventive computer program product can be characterized in that it comprises computer readable program means, initiating the computer to carry out the inventive method. Thereby, the inventive computer program product achieves the same possibilities and advantages which have been discussed in detail with respect to the inventive method.

A further object of the present invention is to achieve communication Network, comprising at least one Network Operator, at least one private Access Point Network and at least one Cleaning Hub, characterized in that the at least one Network Operator and/or the at least one private Access Point Network and/or the at least one Cleaning Hub are configured to carry out an inventive method. Thereby, the inventive communication Network leads to the same advantages which have already been discussed in detail with respect to the inventive method.

The present invention is further described with respect to the drawings which discuss the present invention in more detail but only by way of example.
- Fig. 1: shows a first possibility of an inventive connecting method and
- Fig. 2: shows a further embodiment of the present inventive connecting method.

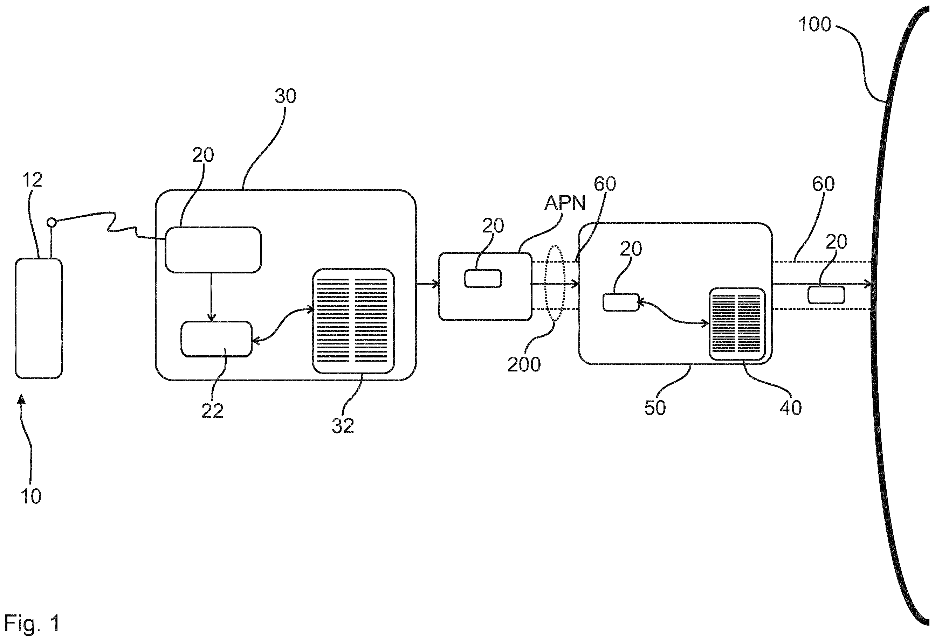

According to fig. 1, first embodiment of an inventive connecting method is depicted. Starting from one single Mobile Device 12, which builds up the Mobile Device System 10 of this embodiment, a communication request 20 is sent to the Network Operator 30. For example, the communication request 20 comprises a request to enter a company Network 100, which is depicted on the right side in fig. 1.

The Network Operator 30 carries out actively a comparison of specification information 22, which has been extracted from the communication request 20, to a connection list 32.

According to the result of that comparison, the Network Operator 30 knows if the Mobile Device System 10 is part of the company owning the Network 100. If it is so, a positive check up against the communication list 32 leads to forwarding the communication request 20 to a Cleaning Hub 50 via a private Access Point Network APN. Thereby, the communication between the private Access Point Network APN and the Cleaning Hub 50 is carried out via the Internet 200. Due to this open communication, a secure communication channel 60 is built up, for example a virtual private Network channel between the private Access Point Network APN and the Cleaning Hub 50.

Within the Cleaning Hub 50, an additional comparison of the specification information 22 can take place and in particular a comparison of the communication request 20 is carried out against the communication policy 40. This leads to a denial or, in the case of fig. 1, allowance of entering the communication to the Network 100. In this situation, a further secure channel 60 is built up between the Cleaning Hub 50 and the Network 100.

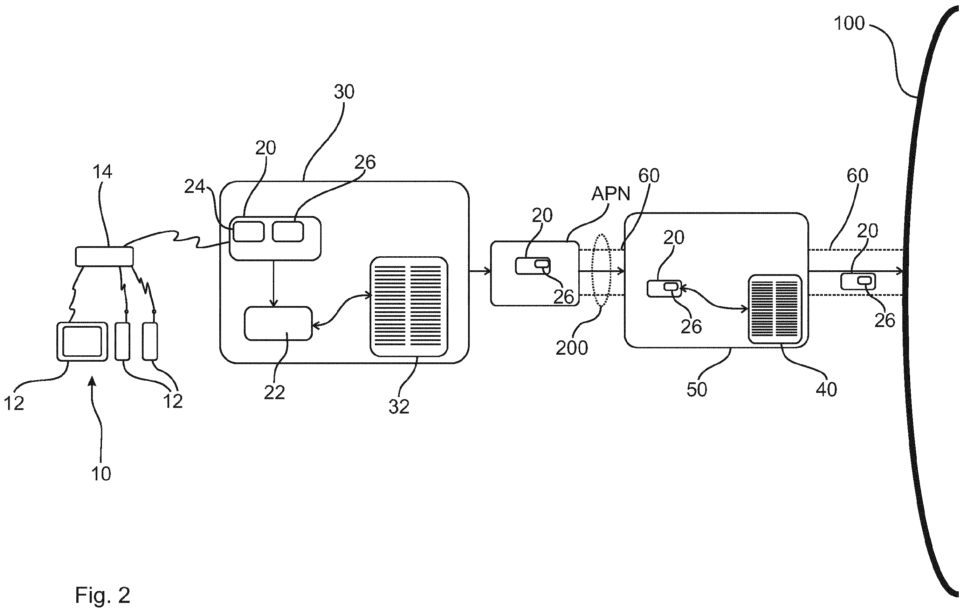

Fig. 2 shows a further embodiment of the present invention differing in some features of the embodiment of fig. 1. For example, the Mobile Device System 10 of this embodiment comprises one Mobile WiFi Device 14 which is able to communicate for example in a cellular way (2G, 3G or 4G Network) with the Network Operator 30. On the other side, the Mobile WiFi Device 14 is able to communicate in a wireless manner with one or more Mobile Devices 12, for example cellphones and tablet PCs.

A further advantage of the embodiment according to fig. 2 is that it is actively triggering the Network Operator 30 to carry out the forward process of the inventive method. It could also comprise a trigger information 24 which triggers the comparison to the connection list 32.

According to this embodiment, the communication request 20 and in particular the specification information 22 can further comprise user specification 26, which is forwarded via the private Access Point Network APN and the Cleaning Hub 50 to the Network 100. This user specification 26 can for example comprise information like a password to enter a secure part of the Network 100, for example an email account of the user of the Mobile WiFi Device 14.

Aforesaid discussion of the present invention is carried out only by example and it is not mention to limit the scope of protection of the present invention.

### Reference Signs

- 10: Mobile Device System
- 12: Mobile Device
- 14: Mobile WiFi Device
- 20: communication request
- 22: specification information
- 24: trigger information
- 26: user specification
- 30: Network Operator
- 32: connection list
- 40: communication policy
- 50: Cleaning Hub
- 60: secure communication channel

- 100: Network
- 200: Internet

- APN: private Access Point Network

## Claims

1. Connecting method for secure connecting of a Mobile Device System (10) to a Network (100), comprising the following steps:
- Sending a communication request (20) from the Mobile Device System (10) to a Network Operator (30) requesting a communication to the Network (100),
- Receiving the communication request (20) at the Network Operator (30) and extracting at least one specification information (22) out of the communication request (20) specifying the Mobile Device System (10),
- Forwarding the communication request (20) at the Network Operator (30) via a private Access Point Network, APN, to a Cleaning Hub (50) based on the specification information (22), wherein the Cleaning Hub (50) is a position within the Internet,
- Comparing the communication request (20) at the Cleaning Hub (50) to at least one communication policy (40),
- Allowing or denying at the Cleaning Hub (50) the communication of the Mobile Device System (10) to the Network (100) requested with the communication request (20) based on the result of the comparison to the at least one communication policy (40).

2. Connecting method according to claim 1 **characterized in that** the specification information (22) is based on information stored in a Subscriber Identity Module, SIM, and/or can comprise a Mobile Device Number.

3. Connecting method according to any of the preceding claims **characterized in that** the Network Operator (30) carries out a comparison of the specification information (22) with a connection list (32), whereby based on that comparison the forwarding of the communication request (20) is carried out.

4. Connecting method according to any of the preceding claims **characterized in that** the specification information (22) comprises a trigger information (24) causing the Network Operator (30) to forward the communication request (20) to the Cleaning Hub (50) via a specific private Access Point Network, APN.

5. Connecting method according to any of the preceding claims **characterized in that** the Mobile Device System (10) comprises at least one Mobile Device (12) and one Mobile WiFi Device (14), whereby the at least one Mobile Device (12) is coupled with the Mobile WiFi Device (14) via a wireless communication and the communication request (20) is sent from the Mobile WiFi Device (14) to the Network Operator (30).

6. Connecting method according to claim 5 **characterized in that** the Mobile WiFi Device comprises a private Access Point Network, APN, configuration so that the communication request (20) is sent from the Mobile WiFi Device (14) to the Cleaning Hub (50) via the private Access Point Network, APN.

7. Connecting method according to claim 1 to 5 **characterized in that** the Network Operator (30) comprises a private Access Point Network APN, configuration so that based on the specification information (22) the communication request (20) is sent from the Mobile Device System to the Cleaning Hub (50) via the private Access Point Network, APN.

8. Connecting method according to any of the preceding claims **characterized in that** a secure communication channel (60) is built up from the Cleaning Hub (50) to the Network (100) the Mobile Device System (10) requested to connect to.

9. Connecting method according to any of the preceding claims **characterized in that** a secure communication channel (60) is built up from the private Access Point Network, APN, to the Cleaning Hub (50).

10. Connecting method according to any of the preceding claims **characterized in that** the specification information (22) comprises at least one user specification (26), whereby that user specification (26), in particular in form of a password, is forwarded to the Network (100) the Mobile Device System (10) requested to connect to.

11. Connecting method according to any of the preceding claims **characterized in that** the communication policy (40) comprises at least one of the following information:
- Black list of banned web pages
- White list of allowed web pages
- user specific lists

12. Connecting method according to any of the preceding claims **characterized in that** the Cleaning Hub (50) checks all data traffic between the Network (100) and the Mobile Device System (10), even after requested communication has been allowed.

13. Computer program product comprising instructions which, when the program is executed by a plurality of computers, cause the plurality of computers to carry out the steps of the method of claim 1.

14. Computer program product according to claim 13 **characterized in that** it comprises further instructions, which, when the program is executed by a computer, cause the computer to carry out the steps of the method of claims 2 to 12.

15. Communication Network (100), comprising at least one Network Operator (30), at least one private Access Point Network APN, and at least one Cleaning Hub (50), **characterized in that** the at least one Network Operator (30) and the at least one private Access Point Network, APN, and the at least one Cleaning Hub (50) are configured to carry out a method according to any of claims 1 to 12.

## Patentansprüche

1. Verbindungsverfahren zum sicheren Verbinden eines mobilen Vorrichtungssystems (10) mit einem Netzwerk (100), das die folgenden Schritte umfasst:
- Senden einer Kommunikationsanfrage (20) vom mobilen Vorrichtungssystem (10) an einen Netzwerkbetreiber (30), die eine Kommunikation mit dem Netzwerk (100) anfordert,
- Empfangen der Kommunikationsanfrage (20) beim Netzwerkbetreiber (30) und Extrahieren mindestens einer Spezifikationsinformation (22) aus der Kommunikationsanfrage (20), die das mobile Vorrichtungssystem (10) spezifiziert,
- Weiterleiten der Kommunikationsanfrage (20) beim Netzwerkbetreiber (30) über ein privates Zugangspunktnetzwerk, APN, an einen Verteilerknoten (50) basierend auf der Spezifikationsinformation (22), wobei der Verteilerknoten (50) eine Position innerhalb des Internets ist,
- Vergleichen der Kommunikationsanfrage (20) am Verteilerknoten (50) mit mindestens einer Kommunikationsrichtlinie (40),
- Zulassen oder Verweigern der mit der Kommunikationsanfrage (20) angeforderten Kommunikation des mobilen Vorrichtungssystems (10) mit dem Netzwerk (100) am Verteilerknoten (50) basierend auf dem Ergebnis des Vergleichs mit der mindestens einen Kommunikationsrichtlinie (40).

2. Verbindungsverfahren nach Anspruch 1, **dadurch gekennzeichnet, dass** die Spezifikationsinformation (22) auf einer Information basiert, die in einem Teilnehmer-Identitätsmodul, SIM, gespeichert ist, und/oder eine mobile Vorrichtungsnummer umfassen kann.

3. Verbindungsverfahren nach einem der vorhergehenden Ansprüche, **dadurch gekennzeichnet, dass** der Netzwerkbetreiber (30) einen Vergleich der Spezifikationsinformation (22) mit einer Verbindungsliste (32) durchführt, wobei basierend auf dem Vergleich die Weiterleitung der Kommunikationsanfrage (20) durchgeführt wird.

4. Verbindungsverfahren nach einem der vorhergehenden Ansprüche, **dadurch gekennzeichnet, dass** die Spezifikationsinformation (22) eine Auslöseinformation (24) umfasst, die den Netzwerkbetreiber (30) veranlasst, die Kommunikationsanfrage (20) über ein spezifisches privates Zugangspunktnetzwerk, APN, an den Verteilerknoten (50) weiterzuleiten.

5. Verbindungsverfahren nach einem der vorhergehenden Ansprüche, **dadurch gekennzeichnet, dass** das mobile Vorrichtungssystem (10) mindestens eine mobile Vorrichtung (12) und eine mobile WiFi-Vorrichtung (14) umfasst, wobei die mindestens eine mobile Vorrichtung (12) mit der mobilen WiFi-Vorrichtung (14) über eine drahtlose Kommunikation gekoppelt ist und die Kommunikationsanfrage (20) von der mobilen WiFi-Vorrichtung (14) an den Netzwerkbetreiber (30) gesendet wird.

6. Verbindungsverfahren nach Anspruch 5, **dadurch gekennzeichnet, dass** die mobile WiFi-Vorrichtung eine Konfiguration mit einem privaten Zugangspunktnetzwerk, APN, umfasst, sodass die Kommunikationsanfrage (20) von der mobilen WiFi-Vorrichtung (14) über das private Zugangspunktnetzwerk, APN, an den Verteilerknoten (50) gesendet wird.

7. Verbindungsverfahren nach den Ansprüchen 1 bis 5, **dadurch gekennzeichnet, dass** der Netzwerkbetreiber (30) eine Konfiguration mit einem privaten Zugangspunktnetzwerk, APN, umfasst, sodass basierend auf der Spezifikationsinformation (22) die Kommunikationsanfrage (20) von dem mobilen Vorrichtungssystem an den Verteilerknoten (50) über das private Zugangspunktnetzwerk, APN, gesendet wird.

8. Verbindungsverfahren nach einem der vorhergehenden Ansprüche, **dadurch gekennzeichnet, dass** ein sicherer Kommunikationskanal (60) vom Verteilerknoten (50) zu dem Netzwerk (100) aufgebaut wird, zu dem das mobile Vorrichtungssystem (10) eine Verbindung anforderte.

9. Verbindungsverfahren nach einem der vorhergehenden Ansprüche, **dadurch gekennzeichnet, dass** ein sicherer Kommunikationskanal (60) vom privaten Zugangspunktnetzwerk, APN, zum Verteilerknoten (50) aufgebaut wird.

10. Verbindungsverfahren nach einem der vorhergehenden Ansprüche, **dadurch gekennzeichnet, dass** die Spezifikationsinformation (22) mindestens eine Benutzerspezifikation (26) umfasst, wobei diese Benutzerspezifikation (26), insbesondere in Form eines Passworts, an das Netzwerk (100) weitergeleitet wird, zu dem das mobile Vorrichtungssystem (10) eine Verbindung anforderte.

11. Verbindungsverfahren nach einem der vorhergehenden Ansprüche, **dadurch gekennzeichnet, dass** die Kommunikationsrichtlinie (40) mindestens eine der folgenden Informationen umfasst:
- Schwarze Liste von verbotenen Webseiten
- Weiße Liste von erlaubten Webseiten
- benutzerspezifische Listen.

12. Verbindungsverfahren nach einem der vorhergehenden Ansprüche, **dadurch gekennzeichnet, dass** der Verteilerknoten (50) den gesamten Datenverkehr zwischen dem Netzwerk (100) und dem mobilen Vorrichtungssystem (10) überprüft, auch nachdem die angeforderte Kommunikation erlaubt wurde.

13. Computerprogrammprodukt, das Anweisungen umfasst, die, wenn das Programm von einer Vielzahl von Computern ausgeführt wird, die Vielzahl von Computern veranlassen, die Schritte des Verfahrens nach Anspruch 1 auszuführen.

14. Computerprogrammprodukt nach Anspruch 13, **dadurch gekennzeichnet, dass** es weitere Anweisungen umfasst, die, wenn das Programm von einem Computer ausgeführt wird, den Computer veranlasst, die Schritte des Verfahrens nach den Ansprüchen 2 bis 12 auszuführen.

15. Kommunikationsnetzwerk (100), umfassend mindestens einen Netzwerkbetreiber (30), mindestens ein privates Zugangspunktnetzwerk, APN, und mindestens einen Verteilerknoten (50), **dadurch gekennzeichnet, dass** der mindestens eine Netzwerkbetreiber (30) und das mindestens eine private Zugangspunktnetzwerk, APN, und der mindestens eine Verteilerknoten (50) so konfiguriert sind, dass sie ein Verfahren nach einem der Ansprüche 1 bis 12 auszuführen.

## Revendications

1. Procédé de connexion pour la connexion sécurisée d'un système de dispositif mobile (10) à un réseau (100), comprenant les étapes suivantes :
- L'envoi d'une demande de communication (20) du système de dispositif mobile (10) à un opérateur de réseau (30) demandant une communication au réseau (100),
- La réception de la demande de communication (20) chez l'opérateur de réseau (30) et l'extraction d'au moins une information de spécification (22) de la demande de communication (20) spécifiant le système de dispositif mobile (10),
- La transmission de la demande de communication (20) à l'opérateur de réseau (30) via un réseau de points d'accès privé, APN, à une jonction de distribution (50) sur la base des informations de spécification (22), la jonction de distribution (50) étant une position au sein de l'internet,
- La comparaison de la demande de communication (20) au jonction de distribution (50) à au moins une politique de communication (40),
- L'autorisation ou le rejet au jonction de distribution (50) de la communication du système de dispositif mobile (10) au réseau (100) demandée avec la demande de communication (20) en fonction du résultat de la comparaison avec au moins une politique de communication (40).

2. Procédé de connexion selon la revendication 1, **caractérisée en ce que** les informations de spécification (22) sont basées sur des informations stockées dans un module d'identité d'abonné, SIM, et/ou peuvent comprendre un numéro de dispositif mobile.

3. Procédé de connexion selon l'une des revendications précédentes, **caractérisé en ce que** l'opérateur de réseau (30) effectue une comparaison des informations de spécification (22) avec une liste de connexion (32), sur la base de cette comparaison, la transmission de la demande de communication (20) est effectuée.

4. Procédé de connexion selon l'une des revendications précédentes **caractérisée en ce que** les informations de spécification (22) comprennent une information de déclenchement (24) amenant l'opérateur de réseau (30) à transmettre la demande de communication (20) au jonction de distribution (50) via un réseau de points d'accès privé spécifique, APN.

5. Procédé de connexion selon l'une des revendications précédentes, **caractérisé en ce que** le système de dispositif mobile (10) comprend au moins un dispositif mobile (12) et un dispositif mobile WiFi (14), moyennant quoi le au moins un dispositif mobile (12) est couplé au dispositif mobile WiFi (14) via une communication sans fil et la demande de communication (20) est envoyée du dispositif mobile WiFi (14) à l'opérateur de réseau (30).

6. Procédé de connexion selon la revendication 5, **caractérisé en ce que** le dispositif mobile WiFi comprend une configuration de réseau de points d'accès privé, APN, de sorte que la demande de communication (20) est envoyée du dispositif mobile WiFi (14) au jonction de distribution (50) via le réseau de points d'accès privé, APN.

7. Procédé de connexion selon les revendications 1 à 5, **caractérisé en ce que** l'opérateur de réseau (30) comprend une configuration de réseau de points d'accès privé, APN, de sorte que, sur la base des informations de spécification (22), la demande de communication (20) est envoyée du système de dispositif mobile au jonction de distribution (50) via le réseau de points d'accès privé, APN.

8. Procédé de connexion selon l'une des revendications précédentes, **caractérisé en ce qu'**un canal de communication sécurisé (60) est établi à partir de la jonction de distribution (50) vers le réseau (100) auquel le système de dispositif mobile (10) doit se connecter.

9. Procédé de connexion selon l'une des revendications précédentes, **caractérisée en ce qu'**un canal de communication sécurisé (60) est établi à partir du réseau de points d'accès privé, APN, vers la jonction de distribution (50).

10. Procédé de connexion selon l'une des revendications précédentes, **caractérisé en ce que** les informations de spécification (22) comprennent au moins une spécification d'utilisateur (26), cette spécification d'utilisateur (26), en particulier sous la forme d'un mot de passe, étant transmise au réseau (100) auquel le système de dispositif mobile (10) doit se connecter.

11. Procédé de connexion selon l'une des revendications précédentes **caractérisée en ce que** la politique de communication (40) comprend au moins une des informations suivantes :
- Liste noire des pages web interdites
- Liste blanche des pages web autorisées
- listes spécifiques aux utilisateurs

12. Procédé de connexion selon l'une des revendications précédentes **caractérisée en ce que** la jonction de distribution (50) vérifie tout le trafic de données entre le réseau (100) et le système de dispositif mobile (10), même après que la communication demandée a été autorisée.

13. Produit de programme informatique comprenant des instructions qui, lorsque le programme est exécuté par une pluralité d'ordinateurs, font en sorte que la pluralité d'ordinateurs exécutent les étapes du procédé de la revendication 1.

14. Produit de programme informatique selon la revendication 13 **caractérisé en ce qu'**il comprend des instructions supplémentaires qui, lorsque le programme est exécuté par un ordinateur, font que l'ordinateur exécute les étapes du procédé des revendications 2 à 12.

15. Réseau de communication (100), comprenant au moins un opérateur de réseau (30), au moins un réseau de points d'accès privé, APN, et au moins une jonction de distribution (50), **caractérisé en ce que** le au moins un opérateur de réseau (30) et le au moins un réseau de points d'accès privé, APN, et le au moins une jonction de distribution (50) sont configurés pour exécuter un procédé selon l'une des revendications 1 à 12.
